# EUROPEAN PATENT SPECIFICATION

(11) **EP 3 680 099 B1**
(45) Date of publication and mention of the grant of the patent: **07.05.2025**
(21) Application number: 19213911.1
(22) Date of filing: 05.12.2019
(51) Int. Cl.: B32B 7/12, B32B 27/08, B32B 27/10, B32B 29/00, B32B 3/08, G06K 19/06, G06K 19/07, G06K 19/077

(54) **PROCESS FOR MAKING A MULTILAYER SHEET, MULTILAYER SHEET AND PRODUCTS OBTAINED THEREWITH**
VERFAHREN ZUR HERSTELLUNG EINER MEHRSCHICHTFOLIE, MEHRSCHICHTFOLIE UND DAMIT HERGESTELLTE PRODUKTE
PROCEDE DE FABRICATION D'UNE FEUILLE MULTICOUCHE, FEUILLE MULTICOUCHE ET PRODUITS OBTENUS

(30) Priority: 07.12.2018 IT 201800010893
(43) Date of publication of application: 15.07.2020
(73) Proprietor: Pavan, Alberto, 35019 Tombolo (PD) (IT); Pavan, Stefano, 35019 Tombolo (PD) (IT)
(72) Inventor: Pavan, Alberto, 35019 Tombolo (PD) (IT); Pavan, Stefano, 35019 Tombolo (PD) (IT)
(74) Representative: Rocchetto, Elena

(56) References cited:
- EP-A2- 2 343 673
- WO-A1-2016/022607
- WO-A1-2017/111590
- WO-A1-2018/011736
- WO-A2-2014/167344
- CN-A- 106 516 401
- CN-B- 106 516 401
- US-A1- 2013 134 213
- US-A1- 2018 121 780
- US-B1- 9 242 436

## Description

The present invention concerns the sector of multilayer sheets made of a paper and/or plastic material and used in the packaging industry, in the paper processing and bookbinding sector and in the sector of graphic arts in general, and more specifically it concerns a new process for the production of a multilayer sheet to be used for making packaging or paper-based or typography products in general, the multilayer sheet obtained through the new process and the products obtained therewith.

For example, paper-based products are products resulting from the processing of paper and cardboard and include products such as: packaging products, book/exercise book covers, posters, shop window posters, panels, business cards, display stands, calendars, brochures, leaflets, bookbinding items like books, typography products in general. Devices for labelling products in general are known, which are used to print a label and apply it to a product or its packaging.

These labels can be made of a paper or plastic material, tied or glued to the product or its packaging, or directly printed on the product or its packaging.

Labels usually contain the essential information concerning the product itself such as, for example: manufacturer's details, product characteristics, year of production etc., according to the specific type of product and to the applicable regulations in force, which require that some compulsory details are specified.

For example, in the case of food products the labels must indicate the place and date of production, the ingredients, how to best preserve the product etc.

In addition to said details, labels can also specify other types of information, for example instructions for use or operation.

This information is obviously limited by the size of the label, that is, by the available space. Therefore, it often occurs that the manufacturer or distributor of a product has very little space to use to provide further information besides the compulsory or necessary details.

In order to solve this problem, a website address is usually specified on the labels, and the user/consumer can access this website through a personal computer or a smartphone or another suitable electronic device in order to find all the additional information provided by the manufacturer/seller in the website itself.

By accessing the website, the user/consumer can also initiate an interaction with the manufacturer/seller, in order to exchange further information, opinions etc. or to make use of multimedia contents of various types.

In most cases, however, the user/consumer, except for specific needs, does not usually visit the website at the moment of purchase or use of the product, since for this operation it is necessary to have the time required to start the internet browser and manually input the address of the website to be visited.

Another drawback posed by the labels which are usually printed and applied to a product is represented by the fact that they often need to be removed, for example, because they are visible and constitute a hindrance during use, or because they are often damaged and become illegible in a short time.

Barcodes and QR codes are also known, which are constituted by a set of graphic elements arranged in such a way as to form a code containing a plurality of data. More specifically, QR codes may contain also website addresses, so that the user or consumer can immediately access said data or information using an electronic device capable of decoding the code.

Being simply printed on paper or plastic supports, exactly like normal labels, even QR codes and barcodes can be damaged and cancelled or be intentionally eliminated by the consumer/user, so that they cannot be read.

Tags containing transponders, microchips, RFID tags are also known, which can contain data concerning the product and communicate said data to a suitable reading device through low frequency radio waves.

The Near Field Communication (NFC) technology, a sub-category of the Radio-frequency Identification (RFID) technology, is also known, which is used for the communication between two electronic devices, or between an electronic device, such as a smartphone with a corresponding chip, and a second chip, and wherein data transmission is obtained by simply moving the electronic device and the chip near each other, typically at a distance of less than 10 cm.

At present, this last type of NFC technology is used for authorization purposes when associating two or more Bluetooth devices, and in turn is used to download files and transfer them between electronic devices, for example to obtain photos, videos, software, games, etc., but also tickets and bookings for events, travel documents, documents concerning stays at hotels or accommodation establishments, or to make payments, for example using mobile payment software or contactless payment cards which communicate with POS devices.

The patent document US9242436 discloses a multilayer electronic card consisting of a bottom layer, a top layer and an intermediate layer, and wherein said bottom layer and said top layer are glued to said intermediate layer by means of a layer of adhesive material.

Said intermediate layer may comprise an RFID label.

Said intermediate layer must have the same dimensions as the top and the bottom layer, since the gluing action takes place between the bottom layer and the intermediate layer and between the top layer and the intermediate layer.

This teaching limits considerably the possibility to vary the structure of the card obtained. Furthermore, the RFID label always needs to be firstly welded or incorporated in the intermediate layer, wherein said intermediate layer must be interposed and glued between said top layer and said bottom layer. The final object obtained thus consists of 5 layers in total, all having the same dimensions; the process for making it thus requires complex preparation and assembly procedures, and is actually suitable only for making electronic cards, as can be understood from the abstract.

The patent document WO2017/111590 A discloses a decorative panel which is particularly suited to be used in railway stations, airports, swimming pools etc. and comprises a main layer on one face of which a decorative layer is applied, and wherein said decorative layer comprises at least one covering layer.

In said main layer there is at least one passive radio-frequency identification sensor (RFID), in turn comprising an integrated chip and an RFID antenna. Said decorative layer can be constituted by several superimposed layers, between which said passive sensor is interposed.

The patent document WO2014/167344 A2 discloses a multilayer printed product comprising at least one support layer and at least one first cardboard layer coupled together, in a first coupling step, with at least one chip interposed therebetween. The product obtained in this way is conveyed to a successive step of printing of said first cardboard layer and a of a second cardboard layer which is successively coupled, in a second coupling step, with the opposite side of said support layer. The obtained product comprises three layers, meaning a central support layer and two cardboard layers coupled with the two faces of the support layer, and wherein a microchip is interposed between said central support layer and the first cardboard layer. The process described is developed in two steps, and even in two different plants (page 4 lines 13-19): a first gluing step and a second step including a printing operation and a second gluing operation.

This process poses the drawback that it conveys to the printing step an already coupled cardboard element with an integrated microchip, intended to be first printed and then coupled again with another cardboard element. Furthermore, the first cardboard element and the second cardboard element must both be cut to a standard size, so that they can be successively processed using the known digital printers. This process is especially suited to make products that must be exactly the same in terms of shape, size and print, since it is possible to proceed in such a way that the first cardboard layer and the support layer are supplied in rolls, the microchips are applied at a modular distance and the cardboard/support layer is successively cut to size. The position of the chips is thus standardized and the printing operation which is successively carried out is consistent with the position of the chip. This process, on the other hand, cannot be applied in the cases where it is necessary to customize the format and the print of the object and the position of the chips on the final product, according to the requirements of the printing process or the client's needs.

The patent document CN 106516401 concerns a rigid container, for example for creams and toothpastes, wherein an NFC chip is attached to an external or internal side of the container, or inside a cavity provided in a side of the container, through a coupling portion.

The coupling portion has a flat or curved surface according to the shape of the container, at the level of the area where the chip is applied. The chip is thus interposed between the container's side and said coupling portion, which is welded to the container's side.

The patent document US 2018/121780 A describes a book, the cover and each page of which are provided with NFC labels that are applied thereto by means of an adhesive layer and are all aligned in the direction orthogonal to the pages, so that when the book is closed the NFC labels are superimposed to one another. In the position corresponding to each NFC label, on the other page of the sheet, there is a metallic screen intended to prevent a reader from inadvertently reading the label positioned on the underlying page while reading a label positioned on a given page. Furthermore, each NFC label is covered by a label.

The patent document US 2013/134213 A1 describes a book comprising an NFC label applied to a part of the book itself, for example to a portion of the cover.

The patent document EP 2 343 673 A2 discloses a document which aims to use a RFID device to simplify making documents, for example tickets, or cards, into which an RFID device has been incorporated. A process of making the document solves the defective alignment of a first and a second layer. The document comprises a first layer and a second layer, made of paper material, and preprinted on the faces thereof, wherein the first layer, or the second layer, contains holes into which the RFID devices are to be inserted, with cover elements located thereon.

The subject of the present patent is a new process for making a multilayer sheet for the production of packaging products or products related to the paper processing and typography sector in general and having an integrated communication device, the multilayer sheet obtained through the new process and the products obtained therewith. It is the main object of the invention to provide a new process for making products which can be completely customized, according to any need, since it is possible to apply said communication device during the sheet processing step, once the sheets have been printed, and therefore according to the print itself, the intended use, the customer's needs.

It is another object of the invention to provide a new process that is suited to be applied for making any type of paper-based or typography product, and therefore also for making packaging material, labels, business cards, covers of books and exercise-books, calendars and bookbinding items in general, posters, advertising boards, shop window posters and panels in general, and so on, and wherein said products come in any shape, size and composition.

It is one object of the invention to obtain a product which immediately places all the information related to a given product and all the information provided by the manufacturer/seller at the disposal of a user/consumer.

It is another object of the invention to obtain a product which makes the information available in a manner that is not only rapid but also simple, since the technology employed can be easily accessed and used by anyone.

It is another object of the invention to obtain a product which makes any possible tampering with the chip contained in the new multilayer sheet or in the product made with said multilayer sheet evident.

These and other direct and complementary objects are achieved by the new process according to claim 1, for making a multilayer sheet for the manufacture of packaging materials or paper-based or typography products in general having an integrated communication device, by the multilayer sheet obtained through this process and by the products obtained therewith.

The new process for making a multilayer sheet comprises the following steps:
- preparing at least one first sheet having any size, made of a paper or plastic material, rigid or flexible, in turn comprising one layer or multiple layers, and wherein a first face of said first sheet is conveniently pre-printed or in any case finished in such a way that it constitutes the visible face of the multilayer sheet or of the product to be obtained;
- defining the position where at least one NFC chip must be positioned on the second face of said first sheet, opposite said first face, according to the configuration of said first face;
- preparing at least one second sheet having any size, made of a paper or plastic material, rigid or flexible, in turn comprising one layer or multiple layers;
- directly coupling said second sheet with said second face of said first sheet, wherein said coupling is obtained through a gluing or welding operation or another process suited to make said first sheet and said second sheet integral with each other in a definitive manner, wherein "definitive" means that their detachment would result in the breaking of one or both of said first and second sheets;
and wherein at least one chip of the NFC type is inserted between said first sheet and said second sheet before they are coupled together or while they are being coupled together, in such a way that it is interposed between them in a definitive manner once the coupling operation has been completed, and in such a way that it can be read at least through said first face of said first sheet by means of a suitable reading device.

The final position of the NFC chip thus depends on the configuration, on the finishing, on the print that may be applied to said first face of the first sheet.

The process can thus be completely customized based on said first sheet and thus on the final expected appearance of the multilayer sheet and of the product obtained therewith. According to the invention, said NFC chip can be preferably but not exclusively be constrained, directly or indirectly, to said second sheet before said second sheet is coupled with said first sheet or substantially while said second sheet is being coupled with said first sheet, in a position corresponding to said position determined on said first sheet.

In a further solution according to the invention, said process may comprise a further step of application of at least one further chip to said second sheet, on the face opposite the face to which said chip interposed between said first sheet and said second sheet adheres. A third sheet will be applied to said second sheet, in such a way that said further chip is interposed between said second sheet and said third sheet.

Said two chips are preferably placed in corresponding positions on the two opposite faces of said second sheet.

Said chips are conveniently shielded, in such a way that the reading of each one of them is not affected by the presence of the other one. For example, said chips can be of the type with incorporated shield, wherein the shield of each chip is always facing towards said second sheet.

Therefore, on the multilayer sheet obtained, the user can access the contents of each chip, by selectively reading the first chip, when reading said visible face of the first sheet, or the second chip, when reading the face of said third sheet.

Said process comprises also the step of programming said at least one chip, according to which all the data of interest are included in said chip.

Said programming step can take place before or after said insertion of said chip between said first sheet and said second sheet.

Said chip can in turn be covered with a waterproof material before being inserted between said two sheets during said coupling step.

The process can also comprise one or more further steps, and precisely: die cutting, engraving, pre-cutting or cutting in general for the successive folding and/or shaping operations in general for the manufacture of a completely customized product which comprises at least one of said multilayer sheets with said at least one chip.

The multilayer sheet obtained through the new process comprises at least two sheets made of a paper or plastic material and coupled together in a non-removable manner, wherein at least one NFC chip, meaning a chip based on NFC technology, is interposed and constrained between them. At least one of said sheets, or first sheet, has a printed or printable visible face, or first face.

Thanks to the very limited size of the NFC chip, the obtained sheet can also be very thin and therefore can be used also to make business cards, covers or pages of books, exercise-books, magazines etc.

The products obtained using the new multilayer sheet are, for example, packaging materials or boxes suited to contain any product such as, for example, boxes for wine bottles or other food products, boxes for household appliances or electronic equipment in general, for games and toys.

For example, the new multilayer sheet can be used to make the packaging of spare parts, wherein in this case the NFC chip can contain also data related to the instructions for the assembly of the part itself.

The new multilayer sheet can also be used in the paper processing and transformation and/or in the typography sector in general, to make covers or one or more pages of exercise-books, books, calendars, diaries, catalogues, brochures, leaflets.

The multilayer sheet can also be used to make business cards, on which it will be possible to print only the name of the company or of a person, or even a logo or an image only, while all the other data can be contained in the NFC chip.

The multilayer sheet can also be used to make labels in general which in turn are suited to be applied to any type of product, and therefore also to clothing items or consumption goods in general.

Furthermore, the new multilayer sheet can also be effectively used, for example, to make labels to be applied to pieces of luggage or packages intended to be shipped, thus also facilitating the operations required to identify and track luggage/parcels in order to correctly send them to their destinations or facilitating the recovery operations in case of loss.

Said multilayer sheet can also be coupled with further one or more sheets/layers, rigid or flexible, such as cloths in any material, fabrics, wood, cork.

The products obtained with the new multilayer sheet can thus have any shape, size and composition, that is, they can be completely customized, thanks to the extreme versatility of use of the multilayer sheet.

In fact, as already explained, said new multilayer sheet can be extremely thin and made of a flexible material, or it may comprise further stiffening and thickening layers.

The new multilayer sheet can be configured to make boards in general, shop window posters, panels.

The obtained product, in particular, can have any size, since the multilayer sheet is made by coupling said first sheet and said second sheet, which in turn can have any size, wherein at least said first sheet is the result of common and completely customizable printing processes. The position of said at least one NFC chip is thus determined once the printing process has been completed at least on said first sheet or in any case once the project concerning the product to be obtained has been defined. The process thus allows the amplest customization of the product to be obtained.

The new multilayer sheet can also be used to make packaging materials/products on which it is neither needed nor desired to apply any visible wording or print or indication regarding senders/addressees or information/data related to the product/manufacturer etc., since some or all of the data and/or information are contained in the NFC chip.

This is particularly useful in the case where the packaging or the labels are used, for example, in conditions of humidity and dirtiness, in which the common printed labels, barcodes or QR codes would quickly become illegible.

The NFC chip contains the data regarding not only the product to which it is applied but it can contain any other data or information regarding the manufacturer/seller and the production technologies, website addresses to be directly accessed.

According to the invention, furthermore, the contents of said NFC chip can be defined before it is installed between the coupled sheets, and it can be not modifiable successively, or it can be modifiable through an authorized access even after its installation between the coupled sheets.

Since the chip is interposed between the coupled sheets in a non-removable manner, it is also possible to immediately notice whether it is the original NFC chip or it has been tampered with, since in order to extract it the multilayer sheet needs to be broken.

The user/consumer of this product uses an electronic device which can communicate with said NFC chip through the respective technology. The user/consumer can thus immediately refer to/download the data and the information contained in the chip at the moment when he/she is choosing or purchasing the product, as well as at the moment of consumption, installation or use of the product in general, since if necessary he/she may even access the connected and authorized websites directly.

The characteristics of the present invention are highlighted in greater detail in the following description, with reference to the attached drawings which are enclosed hereto by way of non-limiting example.

A first sheet (1) comprises a first face (11) intended to be the visible face of the multilayer sheet (10) which must be obtained.

Said first face (11) is thus finished and if necessary printed exactly as it must appear on the multilayer sheet (10) which will be obtained.

Once said first sheet (1) has been prepared, it is possible to determine the position (X) in which at least one NFC chip (3) must be applied, wherein said NFC chip (3) must be positioned on the second face (12) of said first sheet (1), opposite said first face (11).

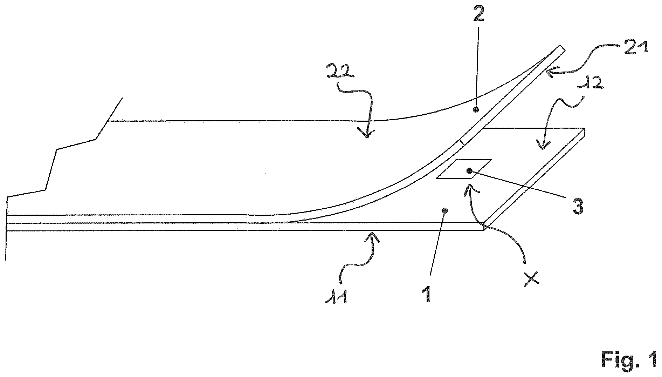

Figure 1 shows said first sheet (1) and a second sheet (2) while they are being coupled together, and wherein said at least one chip (3) is inserted between them in said predetermined position (X) in such a way that, once the coupling operation has been completed, said chip (3) is interposed in a stable manner between said two sheets (1, 2) which are inseparably joined, thus forming a single body with the sheets (1, 2) themselves.

Said chip (3), in particular, is preferably constrained to one face (21) of said second sheet (2) and positioned in such a way that it can be read at least through said first face (11) of said first sheet (1) by means of a suitable reading device.

Since the sheets (1, 2) can have any size, also the obtained multilayer sheet (10) can have any size, and furthermore, according to the mechanical characteristics of said first sheet and second sheet (1, 2) and of any further sheets or layers possibly coupled therewith, it will be possible to obtain a multilayer sheet with completely customizable mechanical characteristics, which can be used to make products which are completely customizable, too, in terms of shape, size and composition.

It is possible to complete the process with the step of application of a further chip, in addition to said chip (3) that is positioned between said first sheet (1) and said second sheet (2).

More specifically, said further chip is applied between said second sheet (2) and a third sheet, and is preferably constrained to said second sheet (2) on the face (22) opposite the face to which said first chip (3) is constrained.

Said chip between said second sheet and said third sheet is in a position preferably corresponding to the position of said chip (3) between said first sheet and said second sheet (1, 2) and said two chips (3) are separated by said second sheet (2) and preferably by at least one shield.

The shield of each chip (3) is conveniently facing towards said second sheet (2), in such a way that the two chips (3) can be selectively read respectively through said first face (11) of said first sheet (1) and through the visible face of said third sheet.

Therefore, with reference to the above description and the attached drawings, the following claims are expressed.

## Claims

1. Process for making a multilayer sheet (10) for the manufacture of packaging or paper-based products or typography and bookbinding items in general such as, for example, posters, shop window posters, panels in general, covers and/or one or more pages of books, exercise-books, diaries, leaflets, brochures, **characterized in that** it comprises the following steps:
- preparing at least one first sheet (1) having any size, made of a paper or plastic material, rigid or flexible, in turn comprising one layer or multiple layers, and wherein a first face (11) of said first sheet (1) is conveniently pre-printed or in any case finished in such a way that it constitutes the visible face of the multilayer sheet (10) or of the product to be obtained;
- defining the position (X) where at least one NFC chip (3) must be positioned on the second face (12) of said first sheet (1), opposite said first face (11);
- preparing at least one second sheet (2) having any size, made of a paper or plastic material, rigid or flexible, in turn comprising one layer or multiple layers;
- directly coupling said second sheet (2) with said second face (12) of said first sheet (1), and wherein said coupling is carried out through a gluing or welding operation or another process suited to make said first sheet and said second sheet integral with each other in a definitive manner, wherein "definitive" means that their detachment would result in the breaking of one or both of said first and second sheets (1, 2);
and wherein said at least one chip (3) of the NFC type is inserted between said first sheet (1) and said second sheet (2) in such a way that it is interposed between them in a definitive manner once the coupling operation has been completed, and in such a way that it can be read at least through said first face (11) of said first sheet (1) by means of a suitable reading device.

2. Process according to claim 1, **characterized in that** said at least one NFC chip (3) is constrained to said second sheet (2) before or during the coupling of said second sheet (2) with said first sheet (1), in a position corresponding to said predetermined position (X) on said first sheet (1).

3. Process according to claim 1 or 2, **characterized in that** it comprises also a step of programming of said at least one chip, wherein one or more data of various types are inserted in said chip.

4. Process according to any of the preceding claims, **characterized in that** it also comprises one or more further steps of die cutting and/or cutting and/or engraving said first sheet and said second sheet (1, 2) coupled together with said at least one chip (3) interposed therebetween, so that they can be successively folded and/or shaped in general to form a completely customizable product.

5. Process according to any of the claims from 1 to 4, **characterized in that** it comprises also the step of coupling at least one third sheet or layer with said second sheet (2), on the side opposite said first sheet (1).

6. Process according to claim 5, **characterized in that** it comprises the step of introducing a further chip between said second sheet (2) and said third sheet, so that said two chips (3) are separated at least by said second sheet (2) and by at least one shield.

7. Process according to claim 6, **characterized in that** said further chip (3') is constrained to said second sheet (2) on the face (22) opposite the face to which said first chip (3) is constrained.

8. Process according to claim 6, **characterized in that** said further chip (3') is in a position corresponding to the position of said chip (3) between said first and said second sheets (1, 2).

9. Multilayer sheet (10) for making packaging or paper-based products, typography or bookbinding items in general obtained through the process according to one or more of the claims from 1 to 5, **characterized in that** it comprises at least two sheets (1, 2) made of a paper or plastic material and directly coupled with each other in a non-removable manner, and at least one chip (3) based on NFC technology and interposed in a stable manner between said two sheets (1, 2).

10. Packaging or box or container in general, **characterized in that** it is made using one or more multilayer sheets (10) produced according to one or more of the claims from 1 to 5.

11. Bookbinding or typography item in general, such as an exercise book, a book, a calendar, **characterized in that** it comprises a cover and/or one or more pages made using one or more multilayer sheets (10) produced according to one or more of the claims from 1 to 5.

12. Paper-based product such as a business card or board or window shop poster or panel or label or packaging in general, **characterized in that** it is made using one or more multilayer sheets (10) produced according to one or more of the claims from 1 to 5.

## Patentansprüche

1. Verfahren zum Herstellen eines mehrschichtigen Blattes (10) für die Fertigung von Verpackungen oder Produkten auf Papierbasis oder von Typografie- und Buchbinder-Artikeln im Allgemeinen, wie z. B. Postern, Schaufensterplakaten, Tafeln im Allgemeinen, Einbänden bzw. einer oder mehreren Seiten von Büchern, Schulheften, Tagebüchern, Prospekten, Broschüren, **dadurch gekennzeichnet, dass** es die folgenden Schritte umfasst:
- Vorbereiten mindestens eines ersten Blattes (1) beliebiger Größe aus einem Papier- oder Kunststoffmaterial, starr oder flexibel, das seinerseits eine oder mehrere Schichten umfasst, wobei eine erste Seite (11) des besagten ersten Blattes (1) zweckmäßig vorbedruckt oder in jedem Fall so bearbeitet ist, dass sie die sichtbare Seite des mehrschichtigen Blattes (10) oder des zu erhaltenden Produkts darstellt;
- Definieren der Position (X), an der mindestens ein NFC-Chip (3) auf der zweiten Seite (12) des besagten ersten Blattes (1), gegenüber der besagten ersten Seite (11), positioniert werden muss;
- Vorbereiten mindestens eines zweiten Blattes (2) beliebiger Größe aus einem Papier- oder Kunststoffmaterial, starr oder flexibel, das seinerseits eine oder mehrere Schichten umfasst;
- direktes Verbinden des besagten zweiten Blattes (2) mit der besagten zweiten Seite (12) des besagten ersten Blattes (1), und wobei das besagte Verbinden durch einen Klebe- oder Schweißvorgang oder ein anderes Verfahren erfolgt, das dazu geeignet ist, das besagte erste Blatt und das besagte zweite Blatt endgültig einstückig miteinander auszuführen, wobei "endgültig" bedeutet, dass ihre Trennung zum Kaputtgehen eines oder beider der besagten ersten und zweiten Blätter (1, 2) führen würde;
und wobei der besagte mindestens eine Chip (3) vom NFC-Typ so zwischen das besagte erste Blatt (1) und das besagte zweite Blatt (2) eingefügt ist, dass er nach Abschluss des Verbindungsvorgangs endgültig dazwischen liegt, und so, dass er mindestens durch die besagte erste Seite (11) des besagten ersten Blattes (1) hindurch mit einer geeigneten Lesevorrichtung gelesen werden kann.

2. Verfahren nach Patentanspruch 1, **dadurch gekennzeichnet, dass** der besagte mindestens eine NFC-Chip (3) vor oder während des Verbindens des besagten zweiten Blattes (2) mit dem besagten ersten Blatt (1) in einer Position, die der besagten vorbestimmten Position (X) auf dem besagten ersten Blatt (1) entspricht, am besagten zweiten Blatt (2) befestigt wird.

3. Verfahren nach Patentanspruch 1 oder 2, **dadurch gekennzeichnet, dass** es auch einen Schritt des Programmierens des besagten mindestens einen Chips umfasst, bei dem ein oder mehrere Datensätze verschiedener Typen in den besagten Chip eingefügt werden.

4. Verfahren nach jeglichem der vorhergehenden Patentansprüche, **dadurch gekennzeichnet, dass** es auch einen oder mehrere weitere Schritte des Stanzens, Schneidens bzw. Gravierens des besagten ersten Blattes und des besagten zweiten Blattes (1, 2) umfasst, die miteinander verbunden sind, wobei der besagte mindestens eine Chip (3) dazwischen liegt, sodass sie nacheinander gefalzt bzw. allgemein geformt werden können, um ein vollständig anpassbares Produkt zu bilden.

5. Verfahren nach jeglichem der Patentansprüche 1 bis 4, **dadurch gekennzeichnet, dass** es auch den Schritt des Verbindens mindestens eines dritten Blattes oder einer dritten Schicht mit dem besagten zweiten Blatt (2) auf der dem besagten ersten Blatt (1) gegenüberliegenden Seite umfasst.

6. Verfahren nach Patentanspruch 5, **dadurch gekennzeichnet, dass** es den Schritt des Einbringens eines weiteren Chips zwischen dem besagten zweiten Blatt (2) und dem besagten dritten Blatt umfasst, sodass die besagten beiden Chips (3) mindestens durch das besagte zweite Blatt (2) und durch mindestens eine Abschirmung getrennt sind.

7. Verfahren nach Patentanspruch 6, **dadurch gekennzeichnet, dass** der besagte weitere Chip (3') auf der Seite (22), die der Seite, auf der der besagte erste Chip (3) befestigt ist, gegenüberliegt, am besagten zweiten Blatt (2) befestigt wird.

8. Verfahren nach Patentanspruch 6, **dadurch gekennzeichnet, dass** sich der besagte weitere Chip (3') in einer Position befindet, die der Position des besagten Chips (3) zwischen dem besagten ersten und dem besagten zweiten Blatt (1, 2) entspricht.

9. Mehrschichtiges Blatt (10) zum Herstellen von Verpackungen oder von Produkten auf Papierbasis, von Typografie- und Buchbinder-Artikeln im Allgemeinen, das durch das Verfahren nach einem oder mehreren der Patentansprüche 1 bis 5 erhalten wird, **dadurch gekennzeichnet, dass** es Folgendes umfasst: mindestens zwei Blätter (1, 2) aus einem Papier- oder Kunststoffmaterial, die direkt und unlösbar miteinander verbunden sind, und mindestens einen Chip (3), der auf der NFC-Technologie basiert und stabil zwischen den besagten beiden Blättern (1, 2) eingefügt ist.

10. Verpackung, Schachtel oder Behälter im Allgemeinen, **dadurch gekennzeichnet, dass** sie/er unter Verwendung eines oder mehrerer mehrschichtiger Blätter (10), die nach einem oder mehreren der Patentansprüche 1 bis 5 produziert werden, hergestellt wird.

11. Buchbinder- oder Typografie-Artikel im Allgemeinen, wie ein Schulheft, ein Buch, ein Kalender, **dadurch gekennzeichnet, dass** er einen Einband bzw. eine oder mehrere Seiten umfasst, der/die unter Verwendung eines oder mehrerer mehrschichtiger Blätter (10), die nach einem oder mehreren der Patentansprüche 1 bis 5 produziert werden, hergestellt wird/werden.

12. Produkt auf Papierbasis, wie eine Visitenkarte, ein Schild, ein Schaufensterplakat, eine Tafel, ein Etikett oder eine Verpackung im Allgemeinen, **dadurch gekennzeichnet, dass** es unter Verwendung eines oder mehrerer mehrschichtiger Blätter (10), die nach einem oder mehreren der Patentansprüche 1 bis 5 produziert werden, hergestellt wird.

## Revendications

1. Procédé de réalisation d'une feuille multicouche (10) pour la fabrication d'emballages ou de produits à base de papier ou d'articles de typographie et de reliure en général tels que, par exemple, des affiches, des affiches de vitrine, des panneaux en général, des couvertures et/ou une ou plusieurs pages de livres, de cahiers, d'agendas, de dépliants, de brochures, **caractérisé en ce qu'**il comprend les étapes suivantes :
- préparer au moins une première feuille (1) de dimensions quelconques, en papier ou en matière plastique, rigide ou souple, comprenant à son tour une ou plusieurs couches, et où une première face (11) de ladite première feuille (1) est convenablement préimprimée ou en tout cas finie de manière à constituer la face visible de la feuille multicouche (10) ou du produit à obtenir ;
- définir la position (X) dans laquelle au moins une puce NFC (3) doit être positionnée sur la deuxième face (12) de ladite première feuille (1), à l'opposé de ladite première face (11) ;
- préparer au moins une deuxième feuille (2) de dimensions quelconques, en papier ou en matière plastique, rigide ou souple, comprenant à son tour une ou plusieurs couches ;
- coupler directement ladite deuxième feuille (2) avec ladite deuxième face (12) de ladite première feuille (1), et où ledit couplage est réalisé par une opération de collage ou de soudage ou par un autre procédé apte à rendre ladite première feuille et ladite deuxième feuille solidaires l'une de l'autre de manière définitive, où le terme "définitif" signifie que leur détachement entraînerait la rupture de l'une ou des deux desdites première et deuxième feuilles (1, 2) ;
et où ladite au moins une puce (3) de type NFC est insérée entre ladite première feuille (1) et ladite deuxième feuille (2) de manière à être interposée entre elles de manière définitive une fois l'opération de couplage terminée, et de manière à pouvoir être lue au moins à travers ladite première face (11) de ladite première feuille (1) au moyen d'un dispositif de lecture approprié.

2. Procédé selon la revendication 1, **caractérisé en ce que** ladite au moins une puce NFC (3) est contrainte sur ladite seconde feuille (2) avant ou pendant le couplage de ladite deuxième feuille (2) avec ladite première feuille (1), dans une position correspondant à ladite position prédéterminée (X) sur ladite première feuille (1).

3. Procédé selon la revendication 1 ou 2, **caractérisé en ce qu'**il comprend également une étape de programmation de ladite au moins une puce, où une ou plusieurs données de différents types sont insérées dans ladite puce.

4. Procédé selon l'une quelconque des revendications précédentes, **caractérisé en ce qu'**il comprend également une ou plusieurs étapes supplémentaires de découpe à l'emporte-pièce et/ou de découpe et/ou de gravure de ladite première feuille et de ladite deuxième feuille (1, 2) couplées ensemble avec ladite au moins une puce (3) interposée entre elles, de sorte qu'elles peuvent être successivement pliées et/ou galbées en général pour former un produit entièrement personnalisable.

5. Procédé selon l'une quelconque des revendications de 1 à 4, **caractérisé en ce qu'**il comprend également l'étape de couplage d'au moins une troisième feuille ou couche avec ladite deuxième feuille (2), sur le côté opposé à ladite première feuille (1).

6. Procédé selon la revendication 5, **caractérisé en ce qu'**il comprend l'étape d'introduction d'une autre puce entre ladite deuxième feuille (2) et ladite troisième feuille, de sorte que lesdites deux puces (3) sont séparées au moins par ladite deuxième feuille (2) et par au moins un écran.

7. Procédé selon la revendication 6, **caractérisé en ce que** ladite autre puce (3') est contrainte sur ladite deuxième feuille (2) sur la face (22) opposée à la face sur laquelle ladite première puce (3) est contrainte.

8. Procédé selon la revendication 6, **caractérisé en ce que** ladite autre puce (3') se trouve dans une position correspondant à la position de ladite puce (3) entre lesdites première et deuxième feuilles (1, 2).

9. Feuille multicouche (10) pour la fabrication d'emballages ou de produits à base de papier, d'articles de typographie ou de reliure en général, obtenue par le procédé selon l'une ou plusieurs des revendications de 1 à 5, **caractérisée en ce qu'**elle comprend au moins deux feuilles (1, 2), en papier ou en matière plastique, directement couplées entre elles de manière inamovible, et au moins une puce (3) basée sur la technologie NFC et interposée de manière stable entre lesdites deux feuilles (1, 2).

10. Emballage ou boîte ou conteneur en général, **caractérisé en ce qu'**il est fabriqué à l'aide d'une ou plusieurs feuilles multicouches (10) produites selon l'une ou plusieurs des revendications de 1 à 5.

11. Article de reliure ou de typographie en général, tel qu'un cahier, un livre, un calendrier, **caractérisé en ce qu'**il comprend une couverture et/ou une ou plusieurs pages réalisées à l'aide d'une ou plusieurs feuilles multicouches (10) produites selon l'une ou plusieurs des revendications de 1 à 5.

12. Produit à base de papier tel qu'une carte de visite, un carton, une affiche ou un panneau de vitrine, une étiquette ou un emballage en général, **caractérisé en ce qu'**il est fabriqué à l'aide d'une ou plusieurs feuilles multicouches (10) produites selon l'une ou plusieurs des revendications de 1 à 5.
